# EUROPEAN PATENT APPLICATION

(11) **EP 0 854 092 A2**
(43) Date of publication of application: **22.07.1998**
(21) Application number: 98102609.9
(22) Date of filing: 28.09.1993
(51) Int. Cl.: B65D 6/32, B65D 8/22

(54) **Container of thermofarmable and heat sealable material**

(30) Priority: 08.10.1992 IT BO920347; 30.10.1992 IT BO920385; 26.07.1993 IT BO920331
(62) Divisional of application: 93921869.9
(71) Applicant: UNIFILL INTERNATIONAL A/G, 8280 Kreuzlingen (CH)
(72) Inventor: Tabaroni, Roberto, 40053 Bazzano (Bologna) (IT); Bartoli, Andrea, 42100 Reggio Emilia (IT); Bulgarelli, Claudio, 41100 Modena (IT)
(74) Representative: Luppi, Luigi

(57) **Abstract**

A container (16) in thermoformable and heat-sealable material includes a hollow casing comprising a pair of thermoformed halves (2) having opposing concavities, joined together by a heat seal (3) along an edge at a substantially median longitudinal plane, the heat seal (3) creating a stiffening rib on the outside of the container (16), the halves (2) being obtained by folding a single sheet along a line defining a lower edge (17) of the container (16); said lower edge (17) is located in an indentation (18) along a base of said container (16), which indentation (18) is of sufficient height to avoid interference between said lower edge (17) and a surface (6) supporting the container (16), when the container (16) is empty.

## Description

The invention concerns a container in thermoformable and heat sealable material, including a hollow casing made up of a pair of halves having opposing concavities, joined together by heat sealing along an edge in correspondence with an essential median longitudinal plane, the heat sealing creating a stiffening rib on the outside of the container.

BE-A-556,274, discloses a bottle in thermoformable and heat sealable material, comprising a pair of halves joined together by gluing or sealing. The halves are provided with an outwardly projecting rib allowing them to be joined together by sealing or other means so as to form an hermetic bottle.

The bottom portion of said halves is incurvated in the region of the bottom end of said outer rib, so that the outwardly projecting rib lies at level higher than the bottom portion of the halves. Therefore the outwardly projecting rib is not detrimental to the stability of the bottle when the latter is in an upright position.

FR-A-1,203,209 discloses a container in plastic material having the shape of a bottle and formed by sealing two halves together along a sealing line. Each half is provided with an outwardly projecting rib extending through the whole extent of the sealing line. At least the portion of each half designed to form the bottom of the container is provided with a recessed portion in close proximity with the outwardly projecting rib and such that the outwardly projecting rib lies in an indentation, when the two halves are joined together to form the container.

FR-A-1,265,926 discloses a container, obtained by sealing together two halves in thermoplastic material, provided with a base shaped as a dihedral designed to accomodate the sealing projecting rib of the two halves.

US-A-3,380,608 discloses a sheet plastic thermoformed blank for forming into a one-piece container comprising two complementary container sections united along a transverse hinge line, said sections comprising bottom or base segments, side wall elements and neck portions. The two sections are formed with flanges that extend laterally from the edges of the side wall elements and neck portions. A container is formed from the blank by bending it along its hinge line until the flanges of the two sections are brought into face to face contact and welding then the abutting flanges into longitudinal seams.

DE-A-2714917 discloses a blow-moulded container comprising a body having on one side a cord having closing means connceted at one of its ends, said closing means being designed to close a mouth in the neck of the container.

According to a first aspect of the present invention, there is provided a container in thermoformable and heat-sealable material including a hollow casing comprising a pair of thermoformed halves having opposing concavities, joined together by a heat seal along an edge at a substantially median longitudinal plane, the heat seal creating a stiffening rib on the outside of the container, the container having an indentation in its base in which a bottom horizontal portion of the heat seal is located, the height of said indentation being such as to avoid interference between the lower edge of said portion and a surface supporting the container when the container is empty, characterized in that part of said material at the heat seal forms an enlarged area provided with removable closing means for closing a neck of said container.

According to a second aspect of the present invention, there is provided a container in thermoformable and heat-sealable material including a hollow casing comprising a pair of thermoformed halves having opposing concavities, joined together by a heat seal along an edge at a substantially median longitudinal plane, the heat seal creating a stiffening rib on the outside of the container, the halves being obtained by folding a single sheet along a line defining a lower edge of the container, characterized in that said lower edge is located in an indentation along a base of said container, which indentation is of sufficient height to avoid interference between said lower edge and a surface supporting the container, when the container is empty.

According to a third aspect of the present invention, there is provided a container in thermoformable and heat-sealable material and full of product, said container including a hollow casing comprising a pair of thermoformed halves having opposing concavities, joined together by a heat seal along an edge at a substantially median longitudinal plane, the heat seal creating a stiffening rib on the outside of the container, the container having an indentation in its base in which a bottom horizontal portion of the heat seal is located, characterized in that the lower edge of said portion bears upon a surface supporting the container and in that part of said material at the heat seal forms an enlarged area provided with removable closing means for closing a neck of said container.

According to a fourth aspect of the present invention, there is provided a container in thermoformable and heat-sealable material and full of product, said container including a hollow casing comprising a pair of thermoformed halves having opposing concavities, joined together by a heat seal along an edge at a substantially median longitudinal plane, the heat seal creating a stiffening rib on the outside of the container, the halves being obtained by folding a single sheet along a line defining a lower edge of the container, characterized in that said lower edge is located in an indentation along a base of said container, and bears upon a surface supporting the container.

According to a fifth aspect of the present invention, there is provided a container in thermoformable and heat-sealable material including a hollow casing comprising a pair of thermoformed halves having opposing concavities, joined together by a heat seal along an edge at a substantially median longitudinal plane, the heat seal creating a stiffening rib on the outside of the container, the container having an indentation in its base in which a bottom horizontal portion of the heat seal is located, characterized in that said horizontal portion is in contact with a support surface when the container is full of product, but is not in contact with said support surface when the container is empty.

According to a sixth aspect of the present invention, there is provided container in thermoformable and heat-sealable material including a hollow casing comprising a pair of thermoformed halves having opposing concavities, joined together by a heat seal along an edge at a substantially median longitudinal plane, the heat seal creating a stiffening rib on the outside of the container, the halves being obtained by folding a single sheet along a line defining a lower edge of the container, characterized in that said lower edge is in contact with a support surface when the container is full of product, but is not in contact with said support surface when the container is empty.

According to a seventh aspect of the present invention, there is provided container in thermoformable and heat-sealable material including a hollow casing comprising a pair of thermoformed halves having opposing concavities, joined together by a heat seal along an edge at a substantially median longitudinal plane, the heat seal creating a stiffening rib on the outside of the container, the container having an indentation in its base in which a bottom horizontal portion of the heat seal is located, the height of said indentation being such as to avoid interference between the lower edge of said portion and a surface supporting the container when the container is empty, characterized in that a portion of said heat seal defining a neck has a saw-tooth profile intended to interact with a screw cap to close and seal against a top edge of the container.

According to a eighth aspect of the present invention, there is provided a container in thermoformable and heat-sealable material and full of product, said container including a hollow casing comprising a pair of thermoformed halves having opposing concavities, joined together by a heat seal along an edge at a substantially median longitudinal plane, the heat seal creating a stiffening rib on the outside of the container, the container having an indentation in its base in which a bottom horizontal portion of the heat seal is located, characterized in that the lower edge of said portion bears upon a surface supporting the container and in that a portion of said heat seal defining a neck has a saw-tooth profile intended to interact with a screw cap to close and seal against a top edge of the container.

According to a nineth aspect of the present invention, there is provided a container in thermoformable and heat-sealable material including a hollow casing comprising a pair of thermoformed halves having opposing concavities, joined together by a heat seal along an edge at a substantially median longitudinal plane, the heat seal creating a stiffening rib on the outside of the container and defining a neck thereof, the container having an indentation in its base in which a bottom horizontal portion of the heat seal is located, the height of said indentation being such as to avoid interference between the lower edge of said portion and a surface supporting the container when the container is empty, characterized in that said neck has an external surface that fits with a cap plug having a pair of opposing incisions.

According to a tenth aspect fo the present invention, there is provided a container in thermoformable and heat-sealable material and full of product, said container including a hollow casing comprising a pair of thermoformed halves having opposing concavities, joined together by a heat seal along an edge at a substantially median longitudinal plane, the heat seal creating a stiffening rib on the outside of the container and defining a neck thereof, the container having an indentation in its base in which a bottom horizontal portion of the heat seal is located, characterized in that the lower edge of said portion bears upon a surface supporting the container and in that said neck has an extended surface that fits with a cap plug having a pair of opposing incisions.

Some embodiments of the invention are illustrated, purely by way of example, in the drawings attached in which:
Figure 1 is a front view of a container according to the invention;
Figure 2 is a view from the left of Figure 1;
Figure 3 is a top view of Figure 1;
Figure 4 is a section through a line IV-IV in Figure 1, of a full container showing the casing deformed by the weight of the product in a self-levelling configuration;
Figure 5 is a front view of a second version of a container according to the invention having a neck with two diameters;
Figure 6 is a section as in Figure 4 of a third version of an empty container according to the invention having a neck with straight sloping sides;
Figure 7 is a view as in Figure 2 of a fourth version of a container according to the invention obtained with the folding of a single sheet;
Figure 8 is a section as in Figure 4 of the container shown in Figure 7;
Figure 9 is a section as in Figure 6 of a fifth version of a container according to the invention, obtained with the folding of a single sheet, which has a neck with straight sloping sides;
Figure 10 is a front view of a sixth version of a container according to the invention having base and sides with indentations for the heat sealing;
Figure 11 is a section through line XI-XI in Figure 10 of a full container;
Figure 12 is a top view of Figure 10;
Figure 13 is a side view of a container as in figure 10, showing a seventh version of a container according to the invention with straight sloping sides;
Figure 14 is a partial, enlarged front View of a first plug for any one of the containers shown in Figures 1 to 13, relating to a container in an as yet unopened configuration;
Figure 15 is a section along a median longitudinal plane of the container of Figure 14 showing a configuration with the plug in place after the container has been opened along a predetermined fracture line;
Figure 16 is a View as in figure 14 of a second version of the plug;
Figure 17 is a section as in Figure 15 showing the version of the plug as in Figure 16;

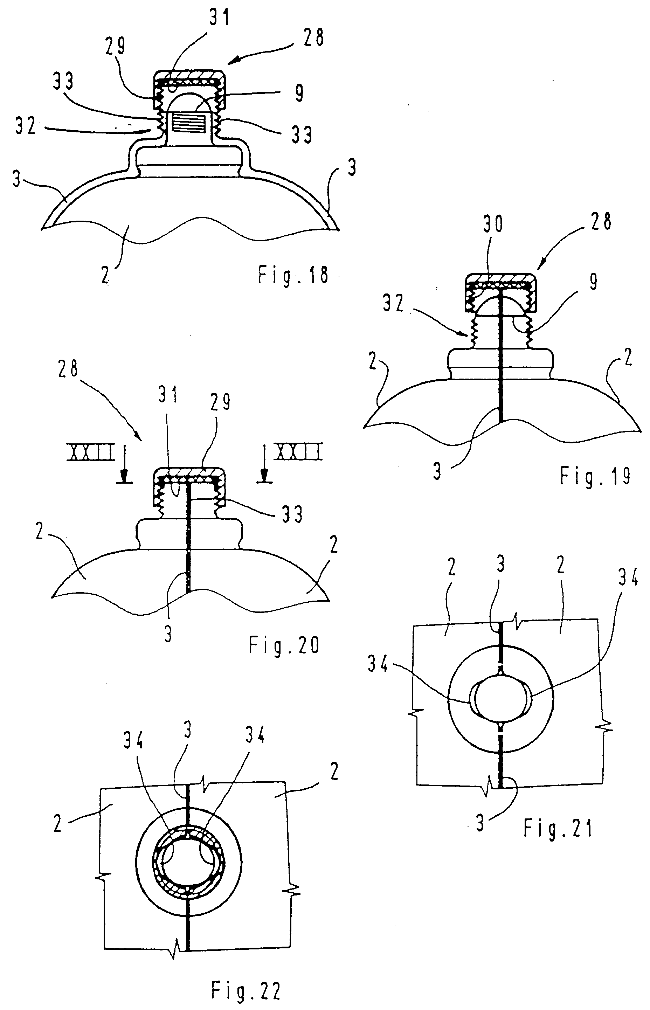

Figure 18 is a View as in Figure 14 of a third version with sectioned screw cap, the container being shown as yet unopened;
Figure 19 is a side view of Figure 18;
Figure 20 is a view as in Figure 19 showing the container in an opened configuration with the cap in place;
Figure 21 is a top view of Figure 20, without the cap;
Figure 22 is a section through a line XXII-XXII in Figure 20;
Figure 23 is a view as in Figure 18 showing a fourth version of the screw cap;
Figure 24 is a view as in Figure 20 showing the fourth version of the cap;
Figure 25 is a transverse section through a line XXV-XXV in figure 24;
Figure 26 is a view as in Figure 14 showing a fifth version of the cap fitting around the external surface of the neck of the container;
Figure 27 is a section as in Figure 15 showing the container of Figure 26;
Figure 28 is a section through a line XXVIII-XXVIII in Figure 27.

Referring to the Figures, a container, or flask, or bottle, 1 according to a first version of the invention consists of a pair of symmetrical halves 2, obtainable by pneumatic thermoformation of a pair of sheets of heat sealable material. The halves 2 have opposing concavities and are joined along their edge by means of a heat seal 3 projecting outward from the cavity of the container and constituting a stiffening rib along the median longitudinal plane. The portion 4 of the heat seal 3 around the base of the container 1 being located in an indentation 5 defined by a pair of portions 7 of the halves 2 having essentially U-shaped sections. The portions 7 of the halves 2 define a pair of horizontally disposed bulges.

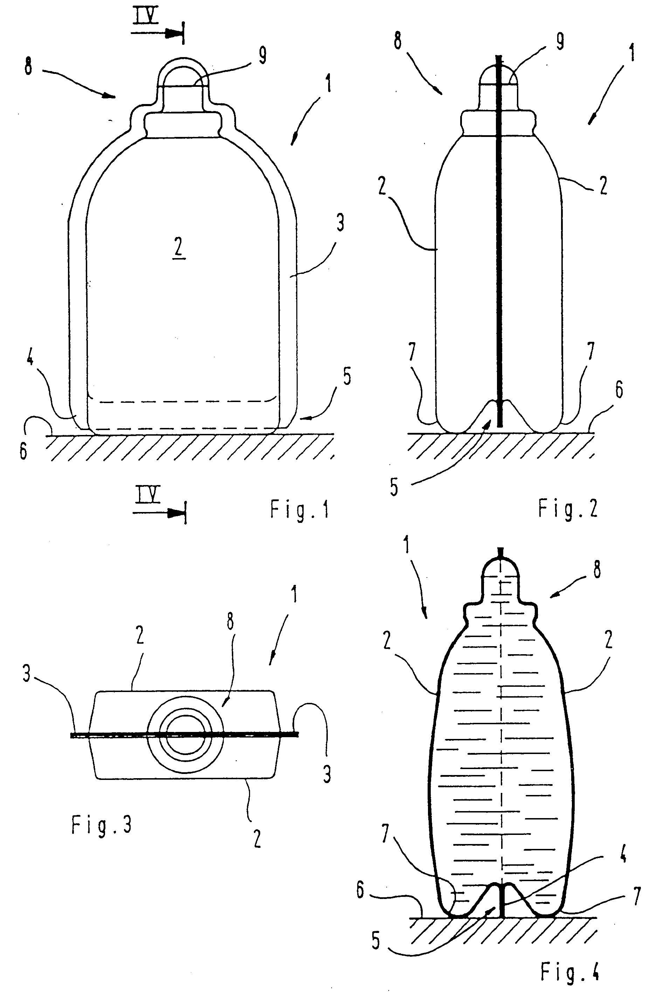

The lower edge of the portion 4 of the heat seal does not interfere with the supporting surface 6: in particular, the said edge does not touch the surface, at least in the condition of the container being empty, whereas the said edge may come into contact with the surface when the container is full, as illustrated in Figure 4.

The neck of the container 1 can be of any form, being, for example, of cylindrical shape 8, even with more than one diameter, and can have at least one predetermined first fracture line 9 to facilitate opening.

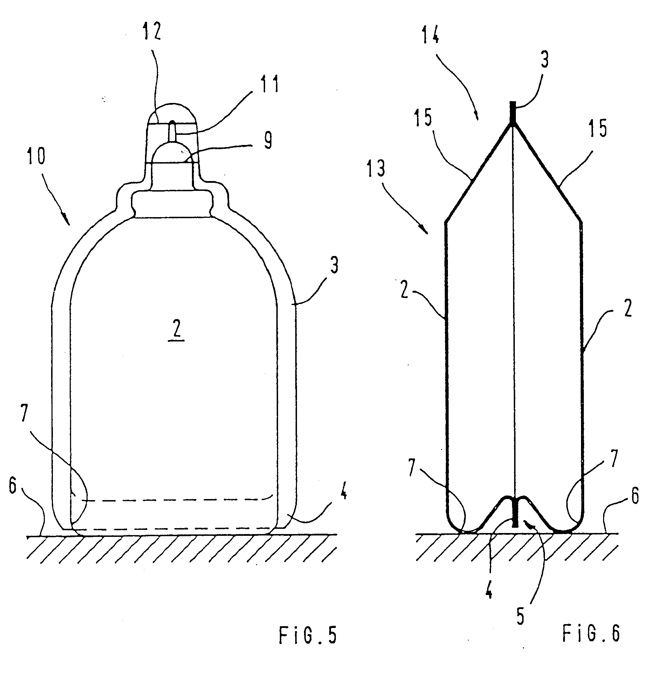

Figure 5 illustrates a container 10, according to a second version, which is essentially correspondent to the container 1 according to the first version, but has a neck with an extension 11 on the upper side, essentially cylindrical or oval, in at least one part being of reduced diameter, on it there being a second predetermined fracture line: the internal diameter of the said extension 11 being such as to permit the discharge of the product drop by drop, or even in a continuous stream by exerting gentle pressure on the halves 2; the section of said extension hovever being sufficiently small not to allow free discharge of the product when the container is lying on its side or is upside down.

Figure 6 illustrates a container 13 according to the third version having a neck 14 consisting of a pair of straight sides sloping downwards, at the top being joined with the top portion of the heat seal 3.

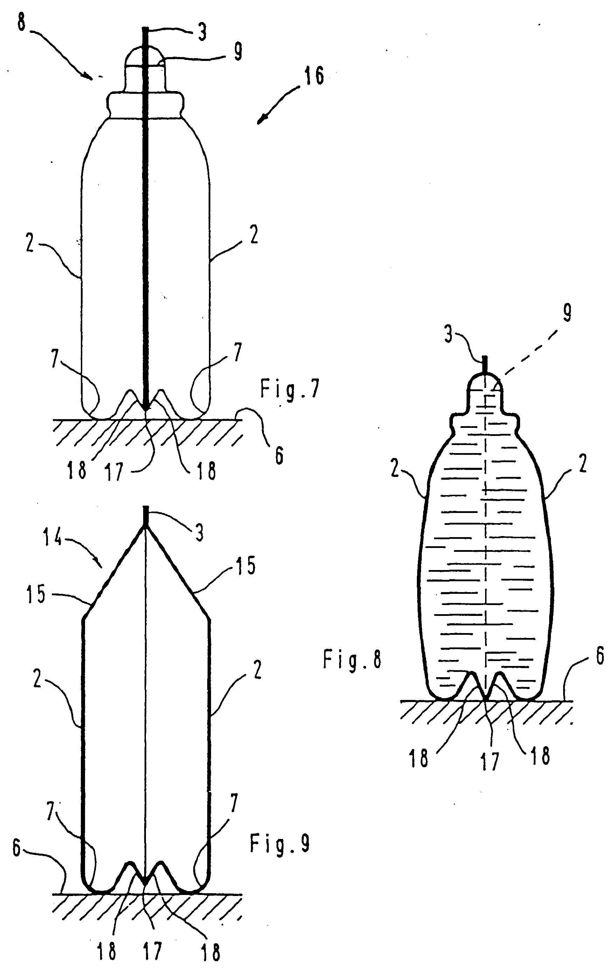

Figure 7 illustrates a container according to the fourth version being obtained by the folding a single sheet along the median line 17 of the base: the U-shaped sections 7 of the half 2 both having attachments 18 converging downwards towards the longitudinal centre-line plane of the container to enable it to be joined with the corresponding attachment of the half 2 on the opposite side of the median folding line 17.

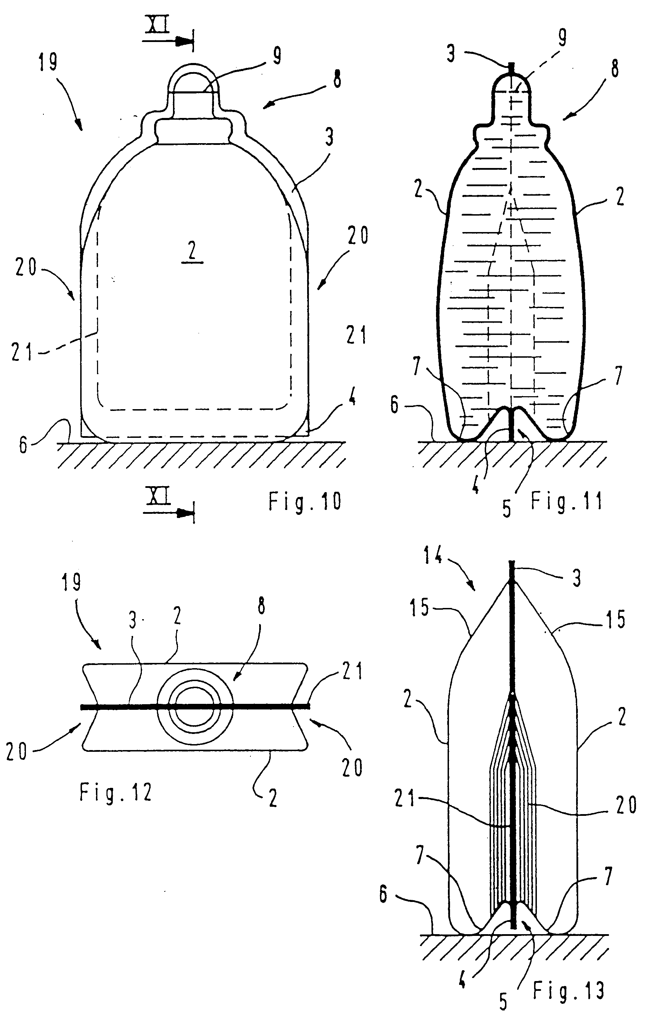

Figure 10 shows a container 19 according to the sixth variation, which, as well as having indentations 5 on its underside to contain the lower portion of heat seal 3, also has indented sides 20 to contain the lateral portions 21 of the heat seal 3: the said heat seal extends beyond the profile of the container only in its upper-middle portions.

The lower portion of each indented side 20 of the container 19 is joined to the indented underside 5 of the container in such a way as to form a single U-shaped indentation inside which a considerable portion of the heat seal 3 is contained.

The plug 21 according to the first version has a lateral surface which is designed to make contact with and seal against the internal surface 23 of the neck of the container: in a particularly frequent case both such surfaces are truncated cones in shape with oval base; with the container is in its sealed configuration, the plug 21 is located with press fit in a hole 24 located in an area 25 of the heat seal 3, it being made wider for that purpose; it is to be noted that the plug 21 can be a separate component, or integral with the container, removable from it along a predetermined fracture line, as in a version not shown.

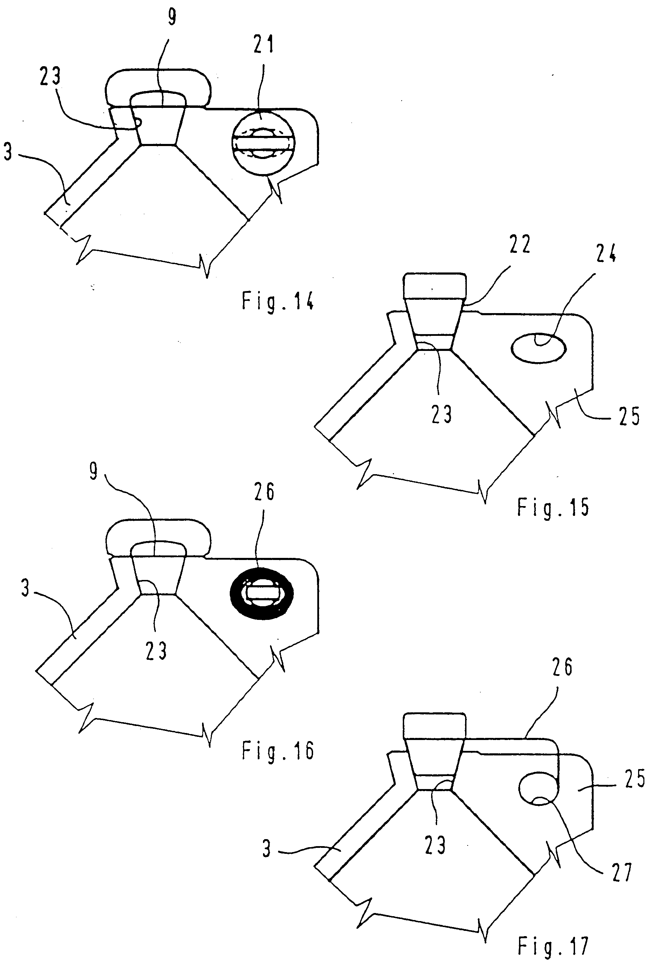

The plug according to the second version (Figures 16, 17) is analogous to the plug according to the first version, but is connected to the area 25 of the heat seal 3 by means of a cord 26 wound in a spiral around the plug 21 with the container in its sealed configuration.

In this version the plug is always integral with the container and fixed in a stable manner to the container itself; the cord being achieved by sequential punching, or incision, in a spiral in the area 25 with a continuous or dashed profile; the unravelling of the spiral determining the formation of a hole 27 in the area 25 analogous to the hole 24 described previously.

The screw cap 28 according to the third version is made up of a cylindrical hollow body 29, having on its inside a screw thread and a seal disc 31 made of soft material and inserted in the bottom of the cavity of the body 29 and designed to provide a liquid-proof seal against the top rim of the neck 32 of the container once it has been opened along the predetermined fracture line 9.

The external surface of the neck 32 has two saw-tooth portions in the heat seal 3 designed to interact with the thread 30 in the body 29 of the cap; the neck 32 also has, in the area without the heat seal 3, a pair of bulges 34 that define an interrupted thread and are also designed to interact with the internal thread 30 of the body 29.

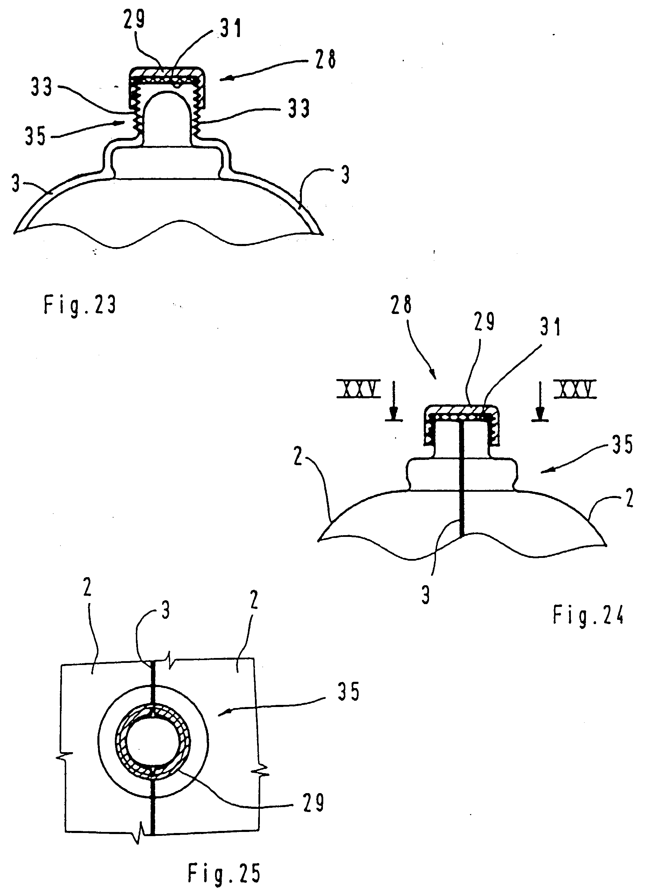

The cap according to the fourth version (Figures 23, 24, 25) is analogous to the screw cap 28, but the neck 35 of the corresponding container only has the saw-tooth profile 33 in the heat seal 3, and the remaining extent of its surface is essentially smooth and cylindrical and functions as centering for the hollow body 29 when winding the thread 30 on the saw-tooth profile 33.

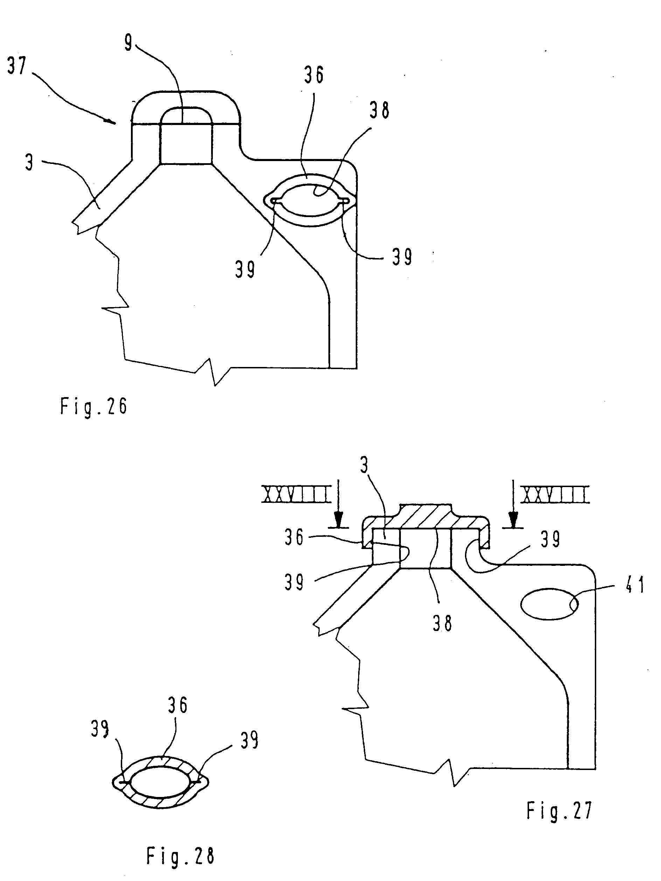

The cap according to the fifth version (Figures 26, 27, 28) is made up of an internally hollow cover 36 that fits around the external surface of the neck 37 of the container when it has been opened along the predetermined fracture line 9; the internal surface of the cavity 38 of the cover has a pair of incisions 39 opposite to each other intended to fit around the upper extremities of the heat seal 3; the external upper surface of the cover can have a shank 40 designed to press fit in a hole 41 to hold the cap when the container is still sealed.

## Claims

1. A container (1; 10; 13; 19) in thermoformable and heat-sealable material including a hollow casing comprising a pair of thermoformed halves (2) having opposing concavities, joined together by a heat seal (3) along an edge at a substantially median longitudinal plane, the heat seal (3) creating a stiffening rib on the outside of the container, the container (1; 10; 13; 19) having an indentation (5) in its base in which a bottom horizontal portion (4) of the heat seal (3) is located, the height of said indentation (5) being such as to avoid interference between the lower edge of said portion (4) and a surface (6) supporting the container (1; 10; 13; 19) when the container (1; 10; 13; 19) is empty, characterized in that part of said material at the heat seal (3) forms an enlarged area (25) provided with removable closing means (21A; 36) for closing a neck (8; 37) of said container (1; 10; 13; 19)

2. A container (16) in thermoformable and heat-sealable material including a hollow casing comprising a pair of thermoformed halves (2) having opposing concavities, joined together by a heat seal (3) along an edge at a substantially median longitudinal plane, the heat seal (3) creating a stiffening rib on the outside of the container (16), the halves (2) being obtained by folding a single sheet along a line defining a lower edge (17) of the container (16), characterized in that said lower edge (17) is located in an indentation (18) along a base of said container (16), which indentation (18) is of sufficient height to avoid interference between said lower edge (17) and a surface (6) supporting the container (16), when the container (16) is empty.

3. A container (1; 10; 13; 19) in thermoformable and heatsealable material and full of product, said container (1; 10; 13; 19) including a hollow casing comprising a pair of thermoformed halves (2) having opposing concavities, joined together by a heat seal (3) along an edge at a substantially median longitudinal plane, the heat seal (3) creating a stiffening rib on the outside of the container, the container (1; 10; 13; 19) having an indentation (5) in its base in which a bottom horizontal portion (4) of the heat seal (3) is located, characterized in that the lower edge of said portion (4) bears upon a surface (6) supporting the container (1; 10; 13; 19) and in that part of said material at the heat seal (3) forms an enlarged area (25) provided with removable closing means (21A; 36) for closing a neck (8; 37) of said container (1; 10; 13; 19)

4. A container (16) in thermoformable and heat-sealable material and full of product, said container (16) including a hollow casing comprising a pair of thermoformed halves (2) having opposing concavities, joined together by a heat seal (3) along an edge at a substantially median longitudinal plane, the heat seal (3) creating a stiffening rib on the outside of the container (16), the halves (2) being obtained by folding a single sheet along a line defining a lower edge (17) of the container (16), characterized in that said lower edge (17) is located in an indentation (18) along a base of said container (16), and bears upon a surface (6) supporting the container (16).

5. A container (1; 10; 13; 19) in thermoformable and heat-sealable material including a hollow casing comprising a pair of thermoformed halves (2) having opposing concavities, joined together by a heat seal (3) along an edge at a substantially median longitudinal plane, the heat seal (3) creating a stiffening rib on the outside of the container, the container (1; 10; 13; 20) having an indentation (5) in its base in which a bottom horizontal portion (4) of the heat seal (3) is located, characterized in that said horizontal portion (4) is in contact with a support surface (6) when the container is full of product, but is not in contact with said support surface (6) when the container is empty.

6. A container (16) in thermoformable and heat-sealable material including a hollow casing comprising a pair of thermoformed halves (2) having opposing concavities, joined together by a heat seal (3) along an edge at a substantially median longitudinal plane, the heat seal (3) creating a stiffening rib on the outside of the container (16), the halves (2) being obtained by folding a single sheet along a line defining a lower edge (17) of the container (16), characterized in that said lower edge (17) is in contact with a support surface (6) when the container (16) is full of product, but is not in contact with said support surface (6) when the container is empty.

7. A container according to any one of claim 2, 4, 5 or 6, wherein part of said material at the heat seal (3) forms an enlarged area (25) provided with removable closing means (21A; 36) for closing a neck (8; 37) of said container (16).

8. A container according to claim 1, 3, or 7, wherein said removable closing means (21A; 36) comprises a removable plug (21A) with press-fit in the internal surface (23) of said neck (8).

9. A container according to claim 1, 3, 7 or 8, wherein said enlarged area (25) is adjacent to said neck (8; 37).

10. A container according to claim 1, 3, 7, 8, or 9, wherein said removable closing means (21A) is connected to said enlarged area (25) by means of a cord (26) wound around said removable closing means (21A) in a spiral, when the container (8) is in its unopened condition.

11. A container according to claim 1, 3, or 7, wherein said neck (37) has an external surface that fits with said removable closing means (36) in the form of a cap plug (36) having a pair of opposing incisions (39).

12. A container (1; 10; 13; 16; 19) in thermoformable and heat-sealable material including a hollow casing comprising a pair of thermoformed halves (2) having opposing concavities, joined together by a heat seal (3) along an edge at a substantially median longitudinal plane, the heat seal (3) creating a stiffening rib on the outside of the container, the container (1; 10; 13; 16; 19) having an indentation (5) in its base in which a bottom horizontal portion (4) of the heat seal (3) is located, the height of said indentation (5) being such as to avoid interference between the lower edge of said portion (4) and a surface (6) supporting the container (1; 10; 13; 16; 19) when the container (1; 10; 13; 16; 19) is empty, characterized in that a portion of said heat seal (3) defining a neck (8; 32; 35) has a saw-tooth profile (33) intended to interact with a screw cap (29) to close and seal against a top edge of the container (1; 10; 13; 16; 19).

13. A container (1; 10; 13; 16; 19) in thermoformable and heat-sealable material and full of product, said container (1; 10; 13; 16; 19) including a hollow casing comprising a pair of thermoformed halves (2) having opposing concavities, joined together by a heat seal (3) along an edge at a substantially median longitudinal plane, the heat seal (3) creating a stiffening rib on the outside of the container, the container (1; 10; 13; 16; 19) having an indentation (5) in its base in which a bottom horizontal portion (4) of the heat seal (3) is located, characterized in that the lower edge of said portion (4) bears upon a surface (6) supporting the container (1; 10; 13; 16; 19) and in that a portion of said heat seal (3) defining a neck (8; 32; 35) has a saw-tooth profile (33) intended to interact with a screw cap (29) to close and seal against a top edge of the container (1; 10; 13; 16; 19).

14. A container according to any one claim 2, 4, 5 or 6, wherein the portion of said heat seal (3) defining said neck (8; 32; 35) has a saw-tooth profile (33) intended to interact with a screw cap (29) to close and seal against a top edge of the container (1; 10; 13; 16; 19).

15. A container according to claim 12, 13 or 14, wherein those parts of the neck (8; 32) that do not have the saw-tooth profile (33) have an interrupted thread (34) intended to assist the saw-tooth profile (33) when screwing on said cap (28).

16. A container according to claim 12, 13 or 14, wherein those parts of the neck (8; 35) that do not have the saw-tooth profile (33) have smooth surfaces, of interrupted substantially cylindrical shape, serving as centering when screwing on said cap (28).

17. A container (1; 10; 13; 16; 19) in thermoformable and heat-sealable material including a hollow casing comprising a pair of thermoformed halves (2) having opposing concavities, joined together by a heat seal (3) along an edge at a substantially median longitudinal plane, the heat seal (3) creating a stiffening rib on the outside of the container and defining a neck (8; 37) thereof, the container (1; 10; 13; 16; 19) having an indentation (5) in its base in which a bottom horizontal portion (4) of the heat seal (3) is located, the height of said indentation (5) being such as to avoid interference between the lower edge of said portion (4) and a surface (6) supporting the container (1; 10; 13; 16; 19) when the container (1; 10; 13; 16; 19) is empty, characterized in that said neck (8; 37) has an external surface that fits with a cap plug (36) having a pair of opposing incisions (39).

18. A container (1; 10; 13; 19) in thermoformable and heat-sealable material and full of product, said container (1; 10; 13; 19) including a hollow casing comprising a pair of thermoformed halves (2) having opposing concavities, joined together by a heat seal (3) along an edge at a substantially median longitudinal plane, the heat seal (3) creating a stiffening rib on the outside of the container and defining a neck (8; 37) thereof, the container (1; 10; 13; 19) having an indentation (5) in its base in which a bottom horizontal portion (4) of the heat seal (3) is located, characterized in that the lower edge of said portion (4) bears upon a surface (6) supporting the container (1; 10; 13; 19) and in that said neck (8; 37) has an extended surface that fits with a cap plug (36) having a pair of opposing incisions (39).
